(19) Europäisches Patentamt
European Patent Office
Office européen des brevets

(11) **EP 3 974 666 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **20306093.4**

(22) Anmeldetag: **25.09.2020**

(51) Internationale Patentklassifikation (IPC):
**F16B 31/02** *(2006.01)* **H01R 4/36** *(2006.01)*

(52) Gemeinsame Patentklassifikation (CPC):
**F16B 31/021; H01R 4/36**

(54) **ABSCHERSCHRAUBE**

SHEAR BOLT

VIS DE CISAILLEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.03.2022 Patentblatt 2022/13**

(73) Patentinhaber: **Nexans**
**92400 Courbevoie (FR)**

(72) Erfinder:
• **MARKGRAF, Volker**
**95195 Röslau (DE)**
• **PAUL, Martin**
**08527 Plauen (DE)**

(74) Vertreter: **Ipsilon**
**Le Centralis**
**63, avenue du Général Leclerc**
**92340 Bourg-la-Reine (FR)**

(56) Entgegenhaltungen:
**EP-A1- 2 071 201    EP-B2- 0 692 643
DE-A1- 19 960 198    GB-A- 2 295 871
US-A- 3 963 322    US-A1- 2012 328 388
US-A1- 2016 104 952**

**Beschreibung**

<u>Gebiet</u>

Die Erfindung betrifft eine Abscherschraube zum Befestigen eines elektrischen Leiters in einem Anschlussstück. Weiterhin betrifft die Erfindung ein Anschlussstück mit einer erfindungsgemäßen Abscherschraube sowie ein Verfahren zum Herstellen einer Abscherschraube.

<u>Hintergrund</u>

Abscherschrauben werden beispielsweise in der Starkstromtechnik zum Verbinden eines Leiters eines Starkstromkabels mit einem Anschlussstück, das zum Beispiel ein Schraubverbinder oder ein Kabelschuh sein kann. Schraubverbinder (kurz: Verbinder) werden zum Verbinden zweier Leiter von Starkstromkabeln eingesetzt. Ein Schraubverbinder ist zum Beispiel als massives Metallrohr mit einem Durchgangsloch zur Aufnahme der Leiter ausgebildet. Quer zu dem Durchgangsloch sind Gewindelöcher zur Aufnahme von Klemmschrauben angeordnet, welche die zu verbindenden Leiter festklemmen. Zur Erzielung und Aufrechterhaltung eines elektrisch gut leitenden Kontakts ist eine feste Verbindung zwischen den Leitern und der Schraubklemme erforderlich, in welche die Leiter eingesteckt sind. Insbesondere ist es erforderlich, dass die Klemmschrauben mit einem bestimmten Drehmoment angezogen werden, das einerseits eine feste Verbindung sicherstellt und andererseits eine Beschädigung von Klemmschraube oder Schraubverbinder vermeidet. Hierfür geeignet sind zum Beispiel sogenannte Drehmomentschlüssel, bei denen ein maximal übertragbares Drehmoment einstellbar ist. Allerdings stehen auf Baustellen geeignete Drehmomentschlüssel im Gegensatz zu einfachen Schrauben- oder Steckschlüsseln häufig nicht zur Verfügung. Um auch mit einfachen Schraubenschlüsseln ein bestimmtes Drehmoment zu erzielen, werden Abscherschrauben eingesetzt, deren Kopf bei einem bestimmten Drehmoment abschert. Auf diese Weise kann mit einfachen Mitteln eine gleichbleibende Festigkeit von Schraubverbindungen erzielt werden. Die Abscherschraube sind zudem so ausgebildet, dass nach dem Abscheren des Schraubenkopfes die Schraube nicht oder nur geringfügig aus der Schraubklemme übersteht. Ein über der Schraubklemme zu montierendes Isolierelement wird daher weder mechanisch beschädigt noch in seinen Isoliereigenschaften beeinträchtigt.

Eine derartige Abscherschraube ist zum Beispiel aus der EP 0 692 643 B2 bekannt. Die bekannte Abscherschraube hat mehrere Etagen, die unterschiedlich große Innensechskantprofile aufweisen, die sukzessive von Etage zu Etage kleiner werden. Konkret weist die oberste Etage das größte Innenprofil auf, sodass ein passendes Werkzeug nicht in die darunterliegende Etage eindringen kann. Wenn das Abscherdrehmoment der obersten Etage erreicht ist, schert die oberste Etage ab und ein Monteur kann ein kleineres Werkzeug in die nachfolgende Etage einstecken usw. Nachteilig bei dieser bekannten Schraube ist, dass insbesondere bei der Montage von dicken Leitern, wenn mehrere Etagen abzuscheren sind auch mehrere Werkzeuge benötigt werden.

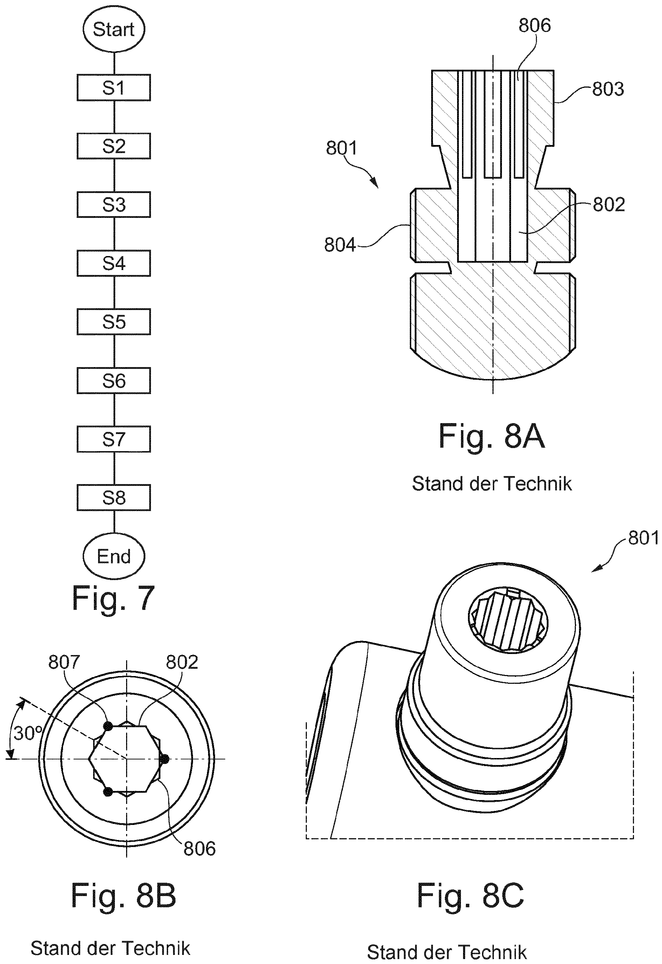

Aus der EP 2 071 201 A1 ist eine weitere Abscherschraube bekannt, für die nur ein einziges Werkzeug mit einer einzigen Werkzeuggröße benötigt wird. Zu diesem Zweck weist die in Figur 8A gezeigte Abscherschraube 801 ein erstes Innensechskantprofil 802 auf, das sich über beide Etagen 803,804 der Abscherschraube erstreckt. In der oberen Etage 803 ist dasselbe Innensechskantprofil um 30° versetzt nochmals als zweites Innensechskantprofil 806 ausgebildet. Das erste Innensechskantprofil 802 wird durch Vorsprünge 807 blockiert, die in Figur 8B gezeigt sind. Dadurch ist für ein passendes Werkzeug nur das zweite Innensechskantprofil 806 zugänglich, das sich nur über die obere Etage erstreckt. In die obere Etage 803 abgeschert ist, dann kann dasselbe Werkzeug in die untere Etage 804 eingeführt werden. In der Praxis hat es sich jedoch gezeigt, dass die beiden ineinander verschachtelten Innensechskantprofile 802,806, die in Figur 8B und 8C dargestellt sind, mit einem Torx-Profil verwechselt werden und daher bei der Montage ein falsches Werkzeug eingesetzt wird, das sich gleichzeitig in beide Etagen 803,804 der Abscherschraube 801 einführen lässt, sodass bei der Verbindung mit einem dicken Leiter in einer Schraubklemme die obere Etage 803 der Abscherschraube 801 nicht abgerissen werden kann und die angezogene Schraube erheblich über den Außenumfang des Schraubverbinders übersteht. Das führt unter anderem dazu, dass eine Isolation auf dem Verbinder nicht vorschriftsmäßig montiert werden kann. Es kann auch sein, dass ein Torx-Schraubenschlüssel das Innensechskantprofil der Abscherschraube beschädigt, und die Schraube gänzlich unbrauchbar wird.

Hiervon ausgehend hat die vorliegende Erfindung die Aufgabe, eine Abscherschraube zu schaffen, um eines oder mehrere der eingangs genannten Probleme zu überwinden oder zumindest zu verbessern.

<u>Beschreibung der Erfindung</u>

Zur Lösung dieser Aufgabe schlägt die Erfindung nach einem ersten Aspekt eine Abscherschraube, die in mindestens drei Abschnitte gegliedert ist, die eine Schraubenspitze sowie zwei Etagen umfassen. Die Etagen weisen jeweils ein Innenprofil mit gleicher Kontur und gleichen Abmessungen auf, in welchem ein Werkzeug formschlüssig in Eingriff bringbar ist. Das Innenprofil der zweiten Etage ist gegenüber dem Innenprofil der ersten Etage um einen vorbestimmten Drehwinkel verdreht ist. Das Innenprofil der zweiten Etage erstreckt sich nur im Bereich der zweiten Etage, sodass ein in die erste Etage eingestecktes und zu dem Innenprofil der ersten Etage passendes Werkzeug nicht in das Innenprofil der zweiten Etage einführbar ist. Die Abscherschraube zeichnet sich zum einen dadurch aus, dass Fehlmontagen praktisch ausgeschlossen sind. Außerdem hat die Abscherschraube den Vorteil, dass die Montage mit nur einem einzigen Werkzeug ausführbar ist.

Bei einem vorteilhaften Ausführungsbeispiel der Abscherschraube weist das Innenprofil einen polygonalen Querschnitt auf und ist insbesondere ein Innensechskantprofil. Innensechskantprofile sind sehr verbreitet und passen mit standardmäßig vorhandenen Werkzeugen zusammen.

Es hat sich als zweckmäßig erwiesen für den vorbestimmten Drehwinkel einen Winkel von 30° zu wählen. Das gilt insbesondere für Innensechskantprofile.

Bei einer Weiterbildung der Abscherschraube sind zwischen den Abschnitten Sollbruchstellen mit vorbestimmten Abschermomenten angeordnet, wobei die Abschermomente von dem Schraubenkopf zur Schraubenspitze hin sukzessive zunehmen. Mit einer so ausgebildeten Abscherschraube sind auch ohne Spezialwerkzeuge unterschiedliche und definierte Anziehmomente realisierbar. So wird ein dünner Leiter in einem Anschlussstück mit einem kleineren Anziehmoment festgeklemmt als ein Leiter, der einen größeren Durchmesser als der dünne Leiter hat.

In einer zweckmäßigen Ausführungsform der Abscherschraube sind die Sollbruchstellen als Einschnitte mit unterschiedlicher Tiefe ausgebildet. Derartige Einschnitte sind mit einer Drehmaschine einfach und mit großer Präzision herstellbar, wodurch auch die Abschermomente der einzelnen Etagen der Abscherschraube genau einstellbar sind.

Mit Vorteil ist in einem Übergangsbereich zwischen den Etagen der Abscherschraube eine Freidrehung angeordnet. Die Freidrehung ermöglicht eine einfache und wirtschaftliche Herstellung der Abscherschraube.

Nach einem zweiten Aspekt schlägt die vorliegende Erfindung ein Anschlussstück für einen elektrischen Leiter vor, dass eine Abscherschraube nach dem ersten Aspekt der Erfindung umfasst. Demgemäß werden die im Zusammenhang mit der erfindungsgemäßen Abscherschraube genannten Vorteile auch von dem Anschlussstück realisiert.

Nach einem dritten Aspekt der Erfindung wird ein Verfahren zur Herstellung einer Abscherschraube vorgeschlagen. Das Verfahren umfasst folgende Schritte:

- Bohren einer Kernbohrung in einen Rohling;

- Einstechen von mindestens zwei Einschnitten in den Rohling, die den Rohling in drei Abschnitte gliedern;

- Freidrehen einer Freidrehung im Übergangsbereich zwischen einem ersten und einem zweiten Abschnitt des Rohlings, wobei die Freidrehung einen größeren Durchmesser als die Kernbohrung aufweist;

- Räumen des ersten Abschnitts des Rohlings mit einem Stempel, um ein polygonales Innenprofil zu erzeugen;

- Drehen des Stempels um einen vorbestimmten Drehwinkel, wenn sich eine Stempelspitze des Stempels im Bereich der Freidrehung befindet;

- Räumen des zweiten Abschnittes des Rohlings mit dem Stempel, um ein polygonales Innenprofil zu erzeugen;

- Ausfahren des Stempels aus dem Rohling; und

- Schneiden eines Außengewindes auf mindestens zwei Abschnitten des Rohlings.

Das vorgeschlagene Verfahren ermöglicht die Herstellung einer Abscherschraube nach dem ersten Aspekt der Erfindung und ist auf einfache Weise auf die Herstellung von Abscherschraube mit mehr als zwei Etagen erweiterbar.

<u>Kurze Beschreibung der Zeichnung</u>

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:

Fig. 1A        einen Schraubverbinder mit Abscherschraube;

Fig. 1B        den Schraubverbinder aus Figur 1A im Querschnitt;

Fig. 2A        ein erstes Ausführungsbeispiel einer erfindungsgemäßen Abscherschraube in einer perspektivischen, teilweise aufgeschnittenen Ansicht;

Fig. 2B        eine perspektivische Draufsicht schräg von oben auf eine Abscherschraube in einem Schraubverbinder;

Fig. 3        ein weiteres Ausführungsbeispiel einer erfindungsgemäßen Abscherschraube in einer perspektivischen, teilweise aufgeschnittenen Ansicht;

Fig. 4A        eine Ansicht eines ersten Montageschritts bei der Montage eines dünnen Leiters in einem Schraubverbinder;

Fig. 4B        eine Detailansicht aus Figur 4A;

Fig. 4C        eine Ansicht eines zweiten Montageschritts bei der Montage eines dünnen Leiters in einem Schraubverbinder;

Fig. 5A-5B        Ansichten aufeinanderfolgenden Montageschritte bei der Montage eines dicken Leiters in einem Schraubverbinder;

Fig. 6A-6D        Schritte bei der Herstellung einer erfindungsgemäßen Abscherschraube;

Fig. 7        ein schematisches Flussdiagramm des Herstellungsverfahrens für eine erfindungsgemäße Abscherschraube; und

Fig. 8A-8C        eine Abscherschraube gemäß dem Stand der Technik.

Gleiche oder ähnliche Elemente sind in den Figuren mit gleichen oder ähnlichen Bezugszeichen versehen.

Ausführungsbeispiele

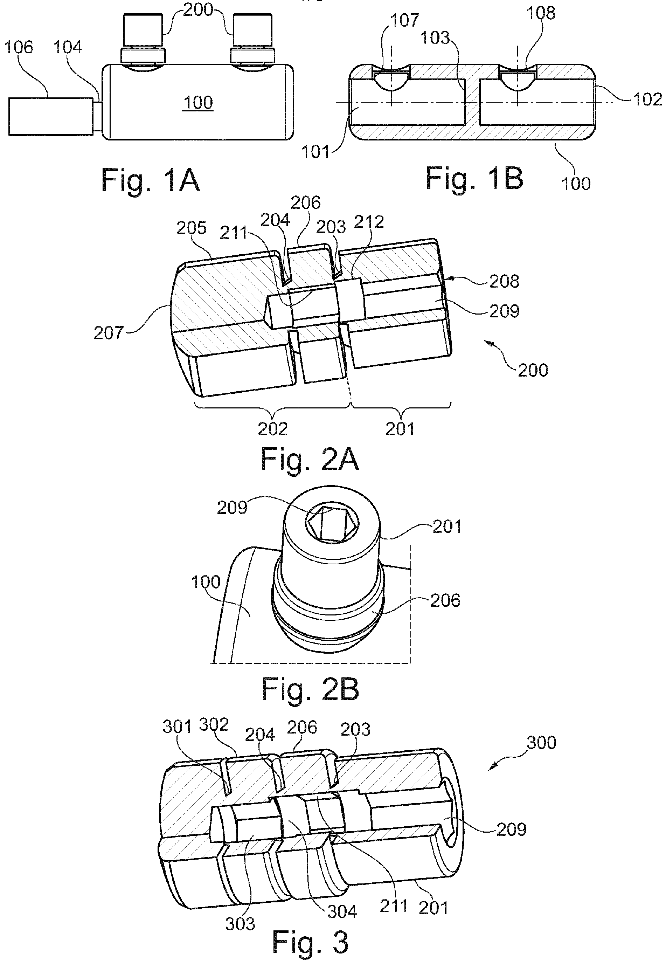

Figur 1A zeigt einen Schraubverbinder 100 in einer Ansicht von der Seite und Figur 1B den Schraubverbinder 100 in einer Querschnittsansicht.

Der Schraubverbinder 100 weist an seinen Stirnseiten jeweils ein Aufnahmeloch 101,102 für Leiter auf, die mittels des Schraubverbinders 100 miteinander verbunden werden sollen. Die Aufnahmelöcher 101,102 sind durch eine Trennwand 103 voneinander getrennt, um eine maximale Einstecktiefe für die Leiter zu definieren. In Figur 1A ist ein Leiter 104, der zu einer isolierten Leitung 106 gehört, in das Aufnahmeloch 101 aufgenommen. Der Schraubverbinder 100 weist darüber hinaus für jedes Aufnahmeloch 101,102 ein Gewindeloch 107,108 auf, die quer zu der Längserstreckung der Aufnahmelöcher orientiert sind. In die Gewindelöcher 107,108 sind Abscherschrauben 200 eingedreht, mit denen in den Aufnahmelöchern 101,102 befindliche Leiter festklemmbar sind, wie im Folgenden noch in größerer Einzelheit beschrieben wird.

Bei anderen Ausführungsbeispielen von Schraubverbindern ist keine Trennwand 103 zwischen den Aufnahmelöchern 101,102 vorgesehen. Die Aufnahmelöcher 101,102 sind in der Regel profiliert (nicht dargestellt), um bei Aluminiumleitern eine oberflächliche Oxidschicht aufzubrechen.

Figur 2A stellt die Abscherschraube 200 in einer perspektivischen und teilweise aufgeschnittenen Ansicht dar. Die Abscherschraube 200 gliedert sich in einen Schraubenkopf 201 und einen Gewindeschaft 202. An dem Übergang zwischen Schraubenkopf 201 und Gewindeschaft 202 ist ein erster Einschnitt 203 vorgesehen, der eine erste Sollbruchstelle SB1 bildet. Der Schraubenkopf 201 wird im Folgenden auch als erste Etage der Abscherschraube 200 bezeichnet. In dem Gewindeschaft 202 ist ein zweiter Einschnitt 204 vorgesehen, der eine zweite Sollbruchstelle SB2 bildet. Der Gewindeschaft 202 ist mit einem durchgängigen Außengewinde 205 versehen, so dass die Abscherschraube 200 ohne weiteres über den zweiten Einschnitt 204 hinaus in eines der Gewindelöcher 107,108 eindrehbar ist. Der Abschnitt des Gewindeschafts 202 zwischen dem ersten Einschnitt 203 und dem zweiten Einschnitt 204 wird im Folgenden als zweite Etage 206 der Abscherschraube 200 bezeichnet. Der andere Abschnitt des Gewindeschafts 202 bildet eine Schraubenspitze 207, deren Ende durch den zweiten Einschnitt 204 markiert ist. Der Einschnitt 203 ist etwas tiefer als der Einschnitt 204, sodass die erste Etage 201 bei einem kleineren Drehmoment abschert als die zweite Etage 206. Wenn man das Abschermoment der ersten Etage als M(SB1) und das Abschermoment der zweiten Etage als M(SB2) bezeichnet, dann gilt

$$M(SB2) > M(SB1).$$

Die Abscherschraube 200 weist ein zentrales Sackloch 208 auf, das sich durch die erste und zweite Etage 201,206 bis über den zweiten Einschnitt 204 hinaus ein Stück in die Schraubenspitze 207 hinein erstreckt. Der Schraubenkopf 201 bzw. die erste Etage weist einen erstes Innensechskantprofil 209 und die zweite Etage 206 einen zweites Innensechskantprofil 211 auf, deren Querschnitte gleich sind. Das erste Innensechskantprofil 209 ist gegenüber dem zweiten Innensechskantprofil 211 um 30° verdreht. Ein Sechskantschlüssel kann somit in die Abscherschraube 200 nur bis zu dem Übergang von der erste Etage 201 zu der zweite Etage 206 eingesteckt werden.

Die erste Etage 201 weist in dem an die zweite Etage 206 angrenzenden Bereich darüber hinaus einen Freidrehung 212 auf, dessen Durchmesser größer als der des Innensechskant 209 ist. Die Bedeutung der Freidrehung 212 wird weiter unten im Zusammenhang mit der Herstellung der Abscherschraube 200 noch näher erläutert.

Figur 2B zeigt eine Ansicht schräg von oben auf die Abscherschraube 200, die in den Schraubverbinder 100 eingedreht ist. In dieser Ansicht ist der Innensechskant 209 gut zu erkennen.

In Figur 3 ist ein weiteres Ausführungsbeispiel einer erfindungsgemäßen Abscherschraube 300 dargestellt, die neben dem bereits beschriebenen ersten Einschnitt 203 und dem zweiten Einschnitt 204 einen dritten Einschnitt 301 aufweist, der eine dritte Sollbruchstelle SB3 bildet. Der Gewindeschaft 202 weist somit neben der zweiten Etage 206 und der Schraubenspitze 207 zusätzlich eine dritte Etage 302 auf, die zwischen der Schraubenspitze 207 und der zweiten Etage 206 liegt. Die erste Etage 201 und die zweite Etage 206 weisen die bereits im Zusammenhang mit Figur 2 Art beschriebenen Innensechskantprofile 209 und 211 auf, die zueinander um 30° verdreht sind. In der dritten Etage 302 ist ein weiteres Innensechskantprofil 303 ausgebildet, das gegenüber dem Innensechskantprofil 211 in der zweiten Etage 206 um 30° verdreht ist. Damit nehmen die Innensechskantprofile 209 und 303 zwar dieselbe Drehposition ein, aber ein Sechskantschlüssel, der in die erste Etage bzw. den Schraubenkopf 201 eingesteckt wird, kann dennoch nur bis zu dem Übergang zwischen der ersten Etage 201 und der zweiten Etage 206 eingesteckt werden. Wenn die erste Etage 201 abschert, dann ist der Sechskantschlüssel in die zweite Etage einsteckbar, aber nur bis zu dem Übergang zwischen der zweiten Etage 206 und der dritten Etage 302, weil der Innensechskant 211 in der zweite Etage 206 gegenüber dem Innensechskant 303 in der dritten Etage 302 um 30° gedreht ist. Erst wenn die zweite Etage 206 abschert, ist der Innensechskant 303 in der dritten Etage 302 für den Sechskantschlüssel zugänglich. Zwischen der zweiten Etage 206 und der dritten Etage 302 ist außerdem eine Freidrehung 304 angeordnet, der bei der Herstellung der Abscherschraube 300 von Bedeutung ist.

Die Tiefe der Einschnitte 203, 204 und 301 nimmt sukzessive ab, sodass die Abschermomente der Sollbruchstellen SB1 bis SB3 von dem Schraubenkopf 201 zu der Schraubenspitze 207 zunehmen. Mit den oben eingeführten Bezeichnungen (M(SBi) ist das Abschermoment der i-ten Etage) gilt somit

$$M(SB3) > M(SB2) > M(SB1).$$

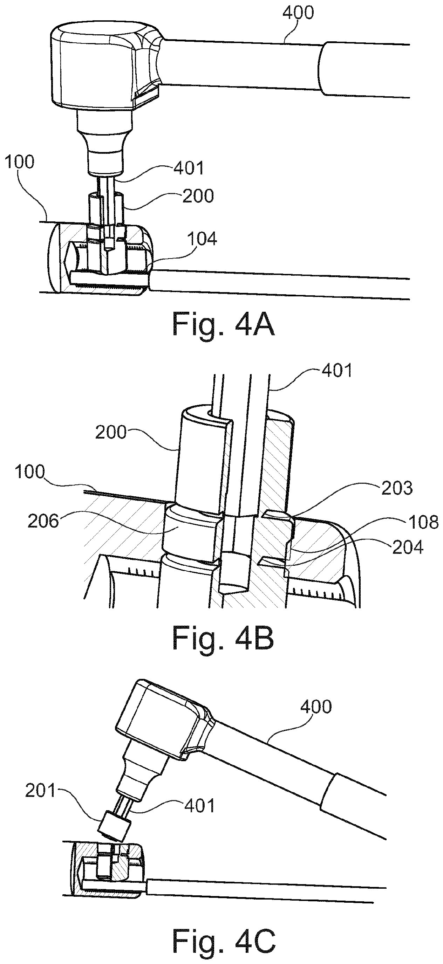

In Figur 4A ist ein erster Montageschritt eines dünnen Leiters 104 in einem Schraubverbinder 100 dargestellt. Zu besserer Veranschaulichung ist der Schraubverbinder teilweise aufgeschnittenen gezeigt. Eine Knarre 400 mit einem Sechskantsteckschlüssel 401 ist in die Abscherschraube 200 eingesteckt. Die Schraube 200 ist bereits so weit in das Gewindeloch 108 eingedreht, dass die Schraubenspitze 207 auf der Außenseite des Leiters 104 aufliegt.

Figur 4B ist ein vergrößerter Ausschnitt aus Figur 4A, in welchem erkennbar ist, dass der Steckschlüssel 401 nur bis zu dem ersten Einschnitt 203 in der Abscherschraube 200 ragt, der die erste Sollbruchstelle SB1 bildet. Wenn eine Bedienungsperson mit der Knarre 400 die Abscherschraube 200 weiter festdreht, bis das ausgeübte Drehmoment das Abscherdrehmoment M(SB1) der ersten Sollbruchstelle überschreitet, dann wird der Schraubenkopf 201 abgeschert, wie es in Figur 4C veranschaulicht ist. Bei dem Festdrehen der Abscherschraube 200 wird der Leiter 104 verformt, was aber für die vorliegende Erfindung nicht weiter von Bedeutung ist. Der zweite Einschnitt 204 der Abscherschraube 200 befindet sich in dieser Darstellung innerhalb des Gewindelochs 108 und die Oberseite der zweiten Etage 206 der Abscherschraube 200 schließt ungefähr bündig mit dem Außenumfang des Schraubverbinder aus 100 ab. Der Montagevorgang ist hiermit beendet.

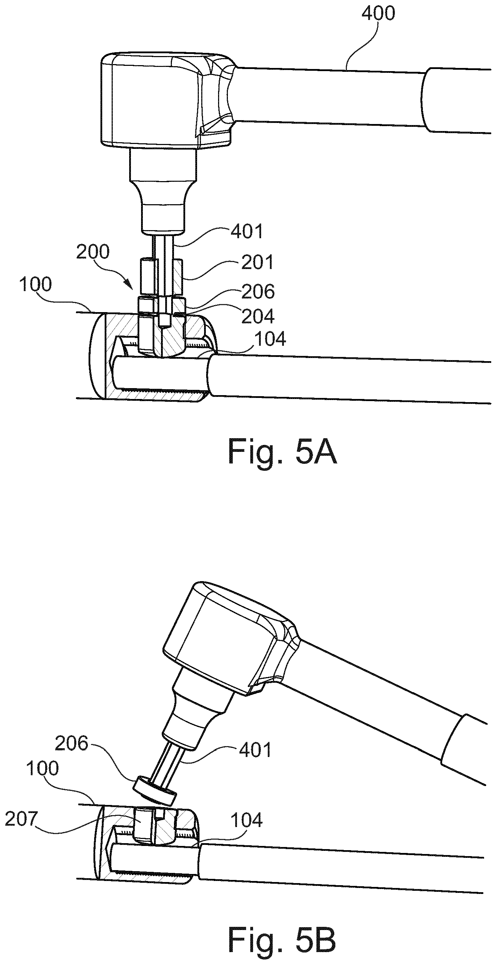

Wenn der Durchmesser des Leiters 104 größer wäre, dann würde die zweite Etage 206 etwas aus dem Gewindeloch 108 herausstehen. Ein geringfügiger Überstand ist jedoch unschädlich für die Montage der eingangs erwähnten Isolation, die auf dem Schraubverbinder 100 noch aufgebracht wird. Erst wenn der Leiter 104 so dick ist, dass die Abscherschraube 200 soweit aus dem Gewindeloch 108 herausragt, dass der zweite Einschnitt außerhalb des Gewindelochs 108 bleibt, dann ist ein weiterer Montageschritt möglich und erforderlich, was im Zusammenhang mit den Figuren 5A und 5B beschrieben wird.

Entsprechend zu Figur 4A zeigt Figur 5A einen erste Montageschritt eines dicken Leiters 104 in dem Schraubverbinder 100. Die Abscherschraube 200 ragt soweit aus dem Gewindeloch 108 heraus, dass der zweite Einschnitt 204 außerhalb des Gewindelochs 108 bleibt. Wenn eine Bedienungsperson mit der Knarre 400 die Abscherschraube weiter festdreht, dann schert zunächst die erste Etage bzw. der Schraubenkopf 201 ab, weil das Abscherdrehmoment der erste Etage M(SB1) kleiner ist als das Abscherdrehmoment der zweite Etage M(SB2). Jetzt kann die Bedienungsperson den Steckschlüssel 401 in die zweite Etage einstecken und die Abscherschraube 200 weiter anziehen bis das Abscherdrehmoment M(SB2) der zweiten Etage 206 überschritten wird und die zweite Etage 206 abschert. Diese Situation ist in Figur 5B veranschaulicht.

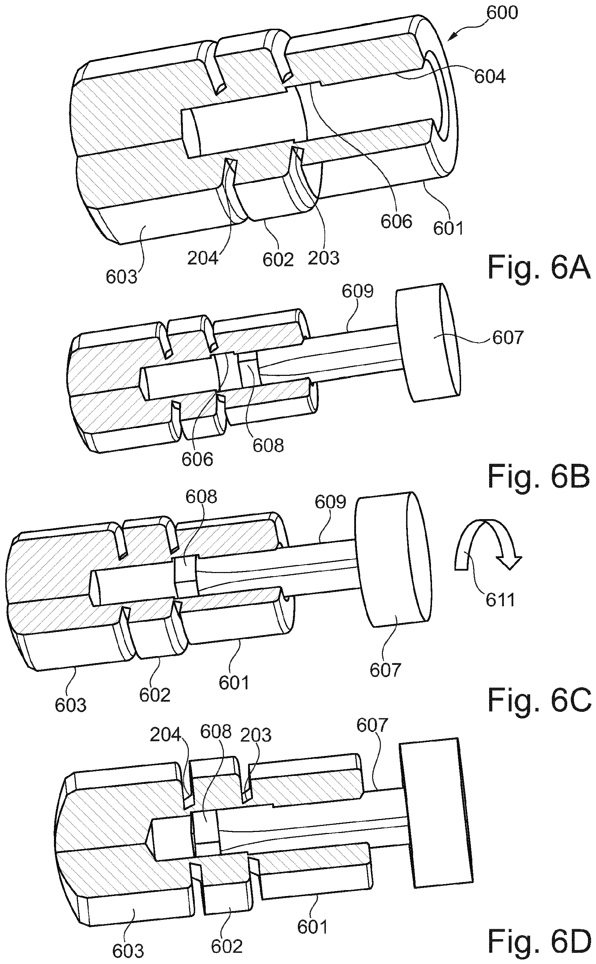

Die Figuren 6A bis 6D illustrieren aufeinanderfolgende Herstellungsschritte zur Herstellung einer erfindungsgemäßen Abscherschraube 200.

Figur 6A zeigt einen Rohling 600, aus dem die Abscherschraube 200 hergestellt wird. Der Rohling 600 weist bereits den ersten und zweiten Einschnitt 203,204 auf, wodurch der Rohling 600 in drei Abschnitte 601-603 gegliedert ist. Die Abschnitte 601-603 entsprechen bei der fertiggestellten Abscherschraube 200 der ersten Etage 201, der zweiten Etage 206 bzw. der Schraubenspitze 207. Der Rohling 600 weist bereits eine als Sackloch ausgebildete Kernbohrung 604 auf, die durch den ersten und zweiten Abschnitt 601,602 hindurch reicht und ein Stück weit in den dritten Abschnitt 603 hineinragt. Weiterhin weist der Rohling 600 eine Freidrehung 606 auf, deren Durchmesser größer ist als der Durchmesser der Kernbohrung 604. Die Kernbohrung 604, die Freidrehung 606 und die beiden Einschnitte 203,204 werden auf einer Drehmaschine hergestellt.

Figur 6B zeigt, wie in die Kernbohrung 604 des Rohlings 600 ein Stempel 607 hineingedrückt wird. Der Stempel 607 weist eine Stempelspitze 608 und einen Stempelschaft 609 auf. Die Stempelspitze 608 ist als Sechskantprofil ausgebildet. Der Stempel 607 wird in die Kernbohrung 604 hineingestoßen und mit der Stempelspitze 608 wird die Kernbohrung 606 geräumt und das erste Innensechskantprofil 209 hergestellt.

Figur 6C zeigt, dass der Durchmesser der Freidrehung 606 geringfügig größer ist als der Durchmesser des Außenumfanges der Stempelspitze 608. D.h. im Bereich der Freidrehung 606 wird kein Material abgetragen. Der Stempelschaft 609 ist hinter der Stempelspitze 608 so weit verjüngt, dass der Stempelschaft 609 nicht mit dem von der Stempelspitze 608 hergestellten Innensechskantprofil 209 in Berührung kommt. Die Freidrehung 606 hat in axialer Richtung der Kernbohrung 604 eine Abmessung, die mindestens so groß ist wie die Dicke der Stempelspitze 208 in axialer Richtung des Stempels 607. D.h. die Stempelspitze 608 ist in der Freidrehung 606 und der Stempelschaft 609 in dem Innensechskantprofil drehbar. Das ist in Figur 6C durch einen Pfeil 611 dargestellt. In einem konkreten Ausführungsbeispiel wird der Stempel um 30° gedreht. Dann wird der Stempel 607 weiter in die Kernbohrung 604 hinein gestoßen, um mit der Stempelspitze 608 die Kernbohrung 604 in dem zweiten Abschnitt 602 zu räumen und das zweite Innensechskantprofil 211 herzustellen, wie es in Figur 6D gezeigt ist.

Nach diesem letzten Arbeitsschritt wird der Stempel 607 wieder aus dem Rohling 600 herausgezogen, wobei der Stempel wieder um 30° gedreht wird, wenn sich die Stempelspitze 608 in der Freidrehung 60 befindet. Abschließend wird auf die Abschnitte 602, 603 ein durchgängiges Außengewinde geschnitten, welche die die zweite Etage 206 bzw. die Schraubenspitze 207 bilden.

In entsprechender Weise lassen sich auch Abscherschrauben mit mehr als zwei Etagen herstellen, wenn eine entsprechende Anzahl von Einschnitten und Freidrehungen in der Kernbohrung der Abscherschraube vorgesehen sind.

Figur 7 zeigt ein Flussdiagramm für ein Verfahren zur Herstellung einer erfindungsgemäßen Abscherschraube mit zwei Etagen. Zunächst wird in einem ersten Schritt S1 eine Kernbohrung 604 in einen Rohling 600 gebohrt. In einem Schritt S2 werden mindestens zwei Einschnitte 203,204 in den Rohling eingestochen, die den Rohling in drei Abschnitte 601-603 gliedern. In einem Schritt S3 wird in einem Übergangsbereich zwischen einem ersten und einen zweiten Abschnitt 601,602 des Rohlings 600 eine Freidrehung 606 mit einer Drehmaschine freigedreht. In einem Schritt S4 wird der erste Abschnitt 601 des Rohlings 600 mit einem Stempel 207 geräumt, um ein erstes Innensechskantprofil 209 zu erzeugen. In einem Schritt S5 wird der Stempel 607 um einen vorbestimmten Drehwinkel, zum Beispiel 30°, gegenüber dem ersten Innensechskantprofil 209 gedreht, wenn sich eine Stempelspitze 608 im Bereich der Freidrehung 606 befindet. In einem Schritt S6 wird der zweite Abschnitt 602 des Rohlings 600 mit dem Stempel 607 geräumt, um ein zweites Innensechskantprofil 211 zu erzeugen. In einem Schritt S7 wird der Stempel 607 aus dem Rohling 600 wieder ausgefahren, wobei er wiederum in der Freidrehung 606 um 30° gedreht wird, damit der Stempel das erste Innensechskantprofil 209 passieren kann. Abschließend wird in einem Schritt S8 ein Außengewinde 205 auf den zweiten und dritten Abschnitt 602,603 des Rohlings 600 geschnitten.

Indem mehr als zwei Einschnitte in den Rohling 600 eingestochen werden, lassen sich Abscherschraube mit mehr als zwei Etagen herstellen, wobei zwischen zwei Etagen immer eine Freidrehung vorzusehen ist.

Die Erfindung ist zwar überwiegend im Zusammenhang mit einem Innensechskantprofil beschrieben worden, wobei Innensechskant Profile in benachbarten Etagen jeweils um 30° zueinander verdreht sind. Aber die Erfindung ist auch mit anderen polygonalen Profilen ausführbar. Auch der vorbestimmte Drehwinkel ist nicht auf 30° beschränkt, sondern es können auch andere Drehwinkel gewählt werden. Es kommt nur darauf an, dass ein Werkzeug immer nur in die oberste Etage der Abscherschraube einstecken lässt.

Bezugszeichenliste

| | | | |
|---|---|---|---|
| 100 | Schraubverbinder | 400 | Knarre/Ratsche |
| 101 | Aufnahmeloch | 401 | Sechskantsteckschlüssel |
| 102 | Aufnahmeloch | | |
| 103 | Trennwand | 600 | Rohling |
| 104 | Leiter | 601 | erste Abschnitt |
| | | 602 | zweite Abschnitt |
| 106 | Isolierte Leitung | 603 | dritter Abschnitt |
| 107 | Gewindeloch | 604 | Kernbohrung |
| 108 | Gewindeloch | | |
| | | 606 | Freidrehung |
| 200 | Abscherschraube | 607 | Stempel |
| 201 | Schraubenkopf/erste Etage | 608 | Stempelspitze |
| 202 | Gewindeschaft | 609 | Stempelschaft |
| 203 | erste Einschnitt | | |
| 204 | zweite Einschnitt | 611 | Pfeil |
| 205 | Außengewinde | | |
| 206 | zweite Etage | | |
| 207 | Schraubenspitze | 801 | Abscherschraube |
| 208 | Sackloch | 802 | erstes Innensechskantprofil |
| 209 | erstes Innensechskantprofil | 803 | obere Etage |
| | | 804 | untere Etage |
| 211 | zweites Innensechskantprofil | | |
| 212 | Freidrehung | 806 | zweites Innensechskantprofil |
| | | 807 | Vorsprünge |
| 300 | Abscherschraube | | |
| 301 | dritter Einschnitt | | |
| 302 | dritte Etage | | |
| 303 | Innensechskantprofil | | |
| 304 | Freidrehung | | |

**Patentansprüche**

1. Abscherschraube, die in mindestens drei Abschnitte (201;206;207) gegliedert ist, die eine Schraubenspitze (207) sowie zwei Etagen (201,206) umfassen, wobei die Etagen (201,206) jeweils ein Innenprofil (209,211) mit gleicher Kontur und gleichen Abmessungen aufweisen, in welchem ein Werkzeug (400,401) formschlüssig in Eingriff bringbar ist, wobei das Innenprofil (211) der zweiten Etage (206) gegenüber dem Innenprofil (209) der ersten Etage (201) um einen vorbestimmten Drehwinkel verdreht ist, **dadurch gekennzeichnet, dass** sich das Innenprofil (211) der zweiten Etage (206) nur im Bereich der zweiten Etage erstreckt, sodass ein in die erste Etage (201) eingestecktes und zu dem Innenprofil (209) der ersten Etage passendes Werkzeug (401) nicht in das Innenprofil (211) der zweiten Etage (206) einführbar ist.

2. Abscherschraube nach Anspruch 1, **dadurch gekennzeichnet, dass** das Innenprofil (209,211) einen polygonalen Querschnitt aufweist und insbesondere ein Innensechskantprofil ist.

3. Abscherschraube nach Anspruch 1 oder 2, **dadurch gekennzeichnet, dass** der vorbestimmte Drehwinkel 30° beträgt.

4. Abscherschraube nach einem der vorstehenden Ansprüche, **dadurch gekennzeichnet, dass** zwischen den Abschnitten Sollbruchstellen (SB1,SB2) mit vorbestimmten Abschermomenten angeordnet sind und dass die Abschermomente von dem Schraubenkopf (201) zur Schraubenspitze (207) hin sukzessive zunehmen.

5. Abscherschraube nach einem der vorstehenden Ansprüche, **dadurch gekennzeichnet, dass** die Sollbruchstellen (SB1,SB2) als Einschnitte (203,204) mit unterschiedlicher Tiefe ausgebildet sind.

6. Abscherschraube nach einem der vorstehenden Ansprüche, **dadurch gekennzeichnet, dass** in einem Übergangsbereich zwischen den Etagen (201,206) der Abscherschraube eine Freidrehung (212) angeordnet ist.

7. Anschlussstück für einen elektrischen Leiter, **dadurch gekennzeichnet, dass** das Anschlussstück (100) eine Abscherschraube (200) nach einem der vorstehenden Ansprüche umfasst.

8. Verfahren zur Herstellung einer Abscherschraube, wobei das Verfahren folgende Schritte umfasst:

- Bohren (S1) einer Kernbohrung (604) in einen Rohling (600);
- Einstechen (S2) von mindestens zwei Einschnitten (203,204) in den Rohling (600), die den Rohling in drei Abschnitte (601-603) gliedern;
- Freidrehen (S3) einer Freidrehung (212) im Übergangsbereich zwischen einem ersten und einen zweiten Abschnitt (601,602) des Rohlings, wobei die Freidrehung (212,304) einen größeren Durchmesser als die Kernbohrung (604) aufweist;
- Räumen (S4) des ersten Abschnitts (601) des Rohlings (600) mit einem Stempel (607), um ein polygonales Innenprofil (209) zu erzeugen;
- Drehen (S5) des Stempels (607) um einen vorbestimmten Drehwinkel, wenn sich eine Stempelspitze (608) des Stempels im Bereich der Freidrehung (212) befindet;
- Räumen (S6) des zweiten Abschnittes (602) des Rohlings (600) mit dem Stempel (607), um ein polygonales Innenprofil (211) zu erzeugen;
- Ausfahren (S7) des Stempels (607) aus dem Rohling; und
- Schneiden (S8) eines Außengewindes (205) auf zwei Abschnitten (602,603) des Rohlings.

**Claims**

1. A shear bolt, which is divided into at least three sections (201; 206; 207), which comprise a bolt tip (207) and two tiers (201, 206), wherein the tiers (201, 206) each have an inner profile (209, 2011) with the same contour and the same dimensions, in which a tool (400, 401) can be positively engaged, wherein the inner profile (211) of the second tier (206) is rotated relative to the inner profile (209) of the first tier (201) by a predetermined angle of rotation, **characterized in that** the inner profile (211) of the second tier (206) extends only in the region of the second tier, so that a tool (401) inserted into the first tier (201) and matching the inner profile (209) of the first tier is not insertable into the inner profile (211) of the second tier (206).

2. The shear bolt according to claim 1, **characterized in that** the inner profile (209, 211) has a polygonal cross section and is in particular a hexagon socket profile.

3. The shear bolt according to claim 1 or 2, **characterized in that** the predetermined angle of rotation is 30°.

4. The shear bolt according to any one of the preceding claims, **characterized in that** predetermined breaking points (SB1, SB2) with predetermined shear moments are arranged between the sections and that the shear moments successively increase from the bolt head (201) to the bolt tip (207).

5. The shear bolt according to any one of the preceding claims, **characterized in that** the predetermined breaking points (SB1, SB2) are designed as incisions (203, 204) with different depths.

6. The shear bolt according to any one of the preceding claims, **characterized in that** a free rotation (212) is arranged in the transition region between the tiers (201, 206) of the shear bolt.

7. A connecting piece for an electrical conductor, **characterized in that** the connecting piece (100) comprises a shear bolt (200) according to any one of the preceding claims.

8. A method for producing a shear bolt, wherein the method comprises the following steps:

- Drilling (S1) a core drill hole (604) into a blank (600);
- inserting (S2) at least two incisions (203, 204) into the blank (600), which divide the blank into three sections (601-603);
- free-rotating (S3) a free rotation (212) in the transition region between a first and a second section (601, 602) of the blank, wherein the free rotation (212, 304) has a larger diameter than the core drill hole (604);
- broaching (S4) the first section (601) of the blank (600) with a punch (607), in order to produce a polygonal inner profile (209);
- rotating (S5) the punch (607) by a predetermined angle of rotation, when a punch tip (608) of the punch is in the region of the free rotation (212);
- broaching (S6) the second section (602) of the blank (600) with the punch (607) in order to produce a polygonal inner profile (211);
- moving (S7) the punch (607) out of the blank; and
- cutting (S8) an external thread (205) on two sections (602, 603) of the blank.

**Revendications**

1. Vis de cisaillement qui est divisée en au moins trois parties (201 ; 206 ; 207), qui comprennent une pointe de vis (207) ainsi que deux étages (201, 206), dans lequel les étages (201, 206) présentent chacun un profil interne (209, 211) avec le même contour et les mêmes dimensions, dans lequel un outil (400, 401) peut être emboîté par complémentarité de forme, dans lequel le profil interne (211) du deuxième étage (206) est tourné d'un angle de rotation prédéterminé par rapport au profil interne (209) du premier étage (201), **caractérisée en ce que** le profil interne (211) du deuxième étage (206) s'étend uniquement au niveau du deuxième étage, de sorte qu'un outil (401) inséré dans le premier étage (201) et adapté au profil interne (209) du premier étage ne peut pas être introduit dans le profil interne (211) du deuxième étage (206).

2. Vis de cisaillement selon la revendication 1, **caractérisée en ce que** le profil interne (209, 211) présente une section transversale polygonale et plus particulièrement est un profil à six pans creux.

3. Vis de cisaillement selon la revendication 1 ou 2, **caractérisée en ce que** l'angle de rotation prédéterminé est de 30°.

4. Vis de cisaillement selon l'une des revendications précédentes, **caractérisée en ce que**, entre les parties, sont disposés des points de rupture prédéterminés (SB1, SB2) avec des couples de cisaillement prédéterminés et **en ce que** les couples de cisaillement augmentent successivement de la tête de vis (201) à la pointe de vis (207).

5. Vis de cisaillement selon l'une des revendications précédentes, **caractérisée en ce que** les points de rupture prédéterminés (SB1, SB2) sont conçus comme des entailles (203, 204) avec des profondeurs différentes.

6. Vis de cisaillement selon l'une des revendications précédentes, **caractérisée en ce que**, dans une zone de transition entre les étages (201, 206) de la vis de cisaillement, est disposée un dégagement de rotation (212).

7. Élément de raccordement pour un conducteur électrique, **caractérisé en ce que** l'élément de raccordement (100) comprend une vis de cisaillement (200) selon l'une des revendications précédentes.

8. Procédé pour la fabrication d'une vis de cisaillement, dans lequel le procédé comprend les étapes suivantes :

   - perçage (S1) d'un alésage central (604) dans une ébauche (600) ;
   - piquage (S2) d'au moins deux entailles (203, 204) dans l'ébauche (600), qui divisent l'ébauche en trois parties (601 - 603) ;
   - tournage libre (S3) d'un dégagement en rotation (212) dans la zone de transition entre une première et une deuxième partie (601, 602) de l'ébauche, dans lequel le dégagement en rotation (212, 304) présente un diamètre supérieur à celui du perçage central (604) ;
   - nettoyage (S4) de la première partie (601) de l'ébauche (600) avec un poinçon (607), afin de produire un profil interne polygonal (209) ;
   - rotation (S5) du poinçon (607) d'un angle de rotation prédéterminé lorsqu'une pointe de poinçon (608) du poinçon se trouve au niveau du dégagement en rotation (212) ;
   - nettoyage (S6) de la deuxième partie (602) de l'ébauche (600) avec le poinçon (607), afin de produire un profil interne polygonal (211) ;
   - sortie (S7) du poinçon (607) hors de l'ébauche ; et
   - découpe (S8) d'un filetage externe (205) sur deux parties (602, 603) de l'ébauche.

106    104                 200

100

## Fig. 1A

107    103         108

101              102

100

## Fig. 1B

205  211  204  206  203  212

207                208
                  209

207

202        201

200

## Fig. 2A

209

201

100              206

## Fig. 2B

301 302  204  206  203

300

209

303        304    211  201

## Fig. 3

Fig. 4A

Fig. 4B

Fig. 4C

Fig. 5A

Fig. 5B

Fig. 6A

Fig. 6B

Fig. 6C

Fig. 6D

Fig. 7

Fig. 8A

Stand der Technik

Fig. 8B

Stand der Technik

Fig. 8C

Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0692643 B2
- EP 2071201 A1